# EUROPEAN PATENT APPLICATION

(11) **EP 4 008 626 A1**
(43) Date of publication of application: **08.06.2022**
(21) Application number: 21209706.7
(22) Date of filing: 22.11.2021
(51) Int. Cl.: B64C 1/24, B64D 29/08

(54) **APPARATUS FOR SUPPORTING A PERSON ADJACENT TO AN AIRCRAFT ENGINE**

(30) Priority: 04.12.2020 US 202063199075 P
(71) Applicant: Gulfstream Aerospace Corporation, Savannah, GA 31402 (US)
(72) Inventor: Bourgeois, Michael, Savannah, 31402 (US); Westphal, Michael, Savannah, 31402 (US)
(74) Representative: LKGlobal UK Ltd.

(57) **Abstract**

Apparatuses for supporting a person adjacent to an aircraft engine having a cowl door with an inner surface are provided. In one example, an apparatus includes a body configured as a step seat for supporting the person. The body includes a first riser section extending generally upward to a first upper riser portion. A first tread section extends generally horizontally from the first upper riser edge portion to a first aft tread edge portion. A stiffener, filler section extends at an incline from the first aft tread edge portion to a distal stiffener, filler edge portion. A second riser section extends generally upward from the distal stiffener, filler edge portion to a second upper riser portion. A second tread section extends generally horizontally from the second upper riser portion to a second aft tread edge portion.

## Description

### TECHNICAL FIELD

The technical field relates generally to maintenance of an engine(s) of an aircraft, and more particularly, relates to an apparatus that is configured to be disposed on an inner surface of an open cowl door of an engine of an aircraft and to ergonomically support a person adjacent to the engine, for example, for servicing the engine.

### BACKGROUND

In the aircraft industry, various components require service maintenance during the life of an aircraft. Aircraft engines are one of numerous such components that require frequent servicing.

Many aircraft use turbine (e.g., turbofan, turbojet, or the like) engines to generate thrust. A gas turbine engine works by compressing air with an inlet and a rotating compressor fan(s), mixing fuel with the compressed air, burning the mixture in a combustor, and then passing the hot, high-pressure air through a turbine and a nozzle to generate thrust. A nacelle forms an exterior housing of the engine. One or more cowl doors may be disposed on the barrel of the nacelle to provide access to the various compartments or areas inside the engine.

For service maintenance, a mechanic or other person typically opens the cowl door and positions themselves on an inner surface of the cowl door to gain access to service the engine. Unfortunately, the working space in this area is very tight or limited often requiring the mechanic or other person to be awkwardly positioned for prolonged periods of time, causing body strain and/or risking injury. Further, the inner surface of the cowl door is not flat but rather contoured with many projecting features, such as, for example, structural ribs, switches, cables, and/or other components that make it difficult for the person to work and move around without slipping, tripping, or having a suitable surface for placing their tools and/or other items for servicing the engine.

Accordingly, it is desirable to provide an apparatus for ergonomically supporting a person adjacent to the engine for servicing an aircraft engine that overcomes one or more of the foregoing issues. Furthermore, other desirable features and characteristics of the various embodiments described herein will become apparent from the subsequent detailed description and the appended claims, taken in conjunction with the accompanying drawings and background.

### SUMMARY

Various non-limiting embodiments of an apparatus for supporting a person adjacent to an aircraft engine having a cowl door with an inner surface are provided herein.

In a first non-limiting embodiment, the apparatus includes, but is not limited to, a body that is configured as a step seat for supporting the person. The body includes, but is not limited to, a first riser section that extends generally upward to a first upper riser portion. The body further includes, but is not limited to, a first tread section that extends generally horizontally from the first upper riser edge portion to a first aft tread edge portion. The body further includes, but is not limited to, a stiffener, filler section that extends at an incline from the first aft tread edge portion to a distal stiffener, filler edge portion. The body further includes, but is not limited to, a second riser section that extends generally upward from the distal stiffener, filler edge portion to a second upper riser portion. The body further includes, but is not limited to, a second tread section that extends generally horizontally from the second upper riser portion to a second aft tread edge portion. The apparatus is configured to be disposed on the inner surface of the cowl door.

In another non-limiting embodiment, the apparatus includes, but is not limited to, a body that is configured as a step seat for supporting the person. The body includes, but is not limited to, a first riser section that extends generally upward to a first upper riser portion. The body further includes, but is not limited to, a first tread section that extends generally horizontally from the first upper riser edge portion to a first aft tread edge portion. The body further includes, but is not limited to, a stiffener, filler section that extends at an incline from the first aft tread edge portion to a distal stiffener, filler edge portion. The body further includes, but is not limited to, a second riser section that extends generally upward from the distal stiffener, filler edge portion to a second upper riser portion. The body further includes, but is not limited to, a second tread section that extends generally horizontally from the second upper riser portion to a second aft tread edge portion. The body further includes, but is not limited to, side panels that are spaced apart from each other and that are correspondingly coupled to and support the first riser section, the first tread section, the stiffener, filler section, the second riser section, and the second tread section. The side panels are disposed vertically and each side panel includes a contoured perimeter edge portion. The contoured perimeter edge portions are configured to substantially, matchingly interface with the inner surface of the cowl door.

### BRIEF DESCRIPTION OF THE DRAWINGS

The various embodiments will hereinafter be described in conjunction with the following drawing figures, wherein like numerals denote like elements, and wherein:
FIG. 1 illustrates a perspective view of an aircraft in accordance with an exemplary embodiment;
FIG. 2 illustrates a perspective front view of an apparatus that is disposed on the open cowl door of an engine of an aircraft and that is configured to support a person adjacent to the engine in accordance with an exemplary embodiment;
FIG. 3 illustrates a perspective front view of an apparatus view that is configured to support a person adjacent to an engine of an aircraft in accordance with the exemplary embodiment;
FIG. 4 illustrates a perspective side view of an apparatus that is configured to support a person adjacent to an engine of an aircraft in accordance with an exemplary embodiment; and
FIG. 5 illustrates a perspective bottom view of a portion of an apparatus that is configured to support a person adjacent to an engine of an aircraft in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Various embodiments contemplated herein relate to apparatuses for supporting a person adjacent to an aircraft engine having a cowl door with an inner surface, for example, for servicing the engine. The exemplary embodiments taught herein provide an apparatus that includes a body that is configured as a step seat for supporting the person. The body includes a first riser section extending generally upward to a first upper riser portion. A first tread section extends generally horizontally from the first upper riser edge portion to a first aft tread edge portion. A stiffener, filler section extends at an incline from the first aft tread edge portion to a distal stiffener, filler edge portion. A second riser section extends generally upward from the distal stiffener, filler edge portion to a second upper riser portion. A second tread section extends generally horizontally from the second upper riser portion to a second aft tread edge portion. The apparatus is configured to be disposed on the inner surface of the cowl door.

In an exemplary embodiment, advantageously the apparatus is configured to interface with the smooth contoured areas of the inner surface of the cowl door while having reliefs or cut-out openings to accommodate any projecting features so that the apparatus is securely nested against the inner surface of the cowl door, thereby minimizing or preventing any side-to-side movement or slippage. Further, advantageously the generally horizontal surfaces of the first and second tread sections provides a suitable area for the person to comfortably position themselves (e.g., standing, sitting, or laying down) and/or to move about without the risk of tripping or slipping to service the aircraft engine. Additionally, advantageously the inclined stiffener, filler section, the first tread section, and/or the second tread section provide suitable surfaces for the person to place their tools on and/or other items for servicing the engine.

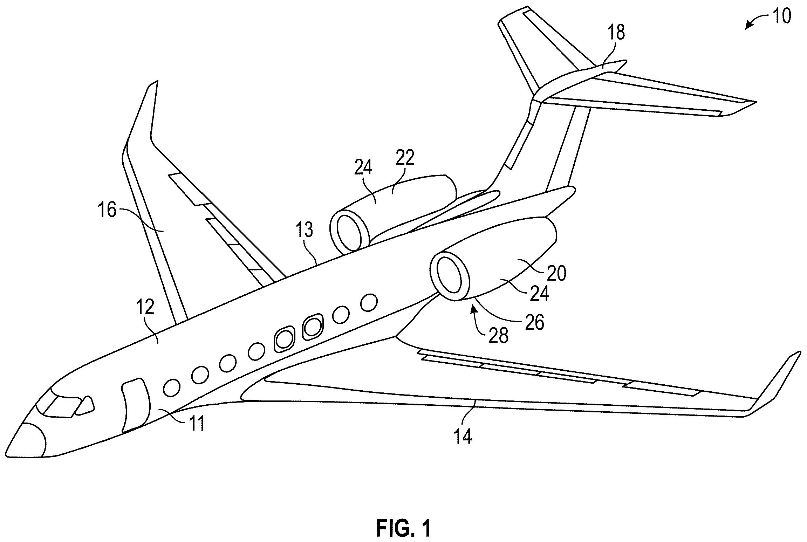

FIG. 1 illustrates a perspective view of an aircraft 10 in accordance with an exemplary embodiment. The aircraft 10 includes a fuselage 12 as the main body of the aircraft that supports the wings 14 and 16 that extend laterally outward from opposing sides 11 and 13 of the fuselage, and a tail 18. Engines 20 and 22 are disposed adjacent to the sides 11 and 13, respectively, of the fuselage 12. In an exemplary embodiment, the engine 20 is mounted to the side 11 of the fuselage 12 forward of the tail 18 and aft of the wing 14. Likewise, the engine 22 is mounted to the side 13 of the fuselage 12 forward of the tail 18 and aft of the wing 16.

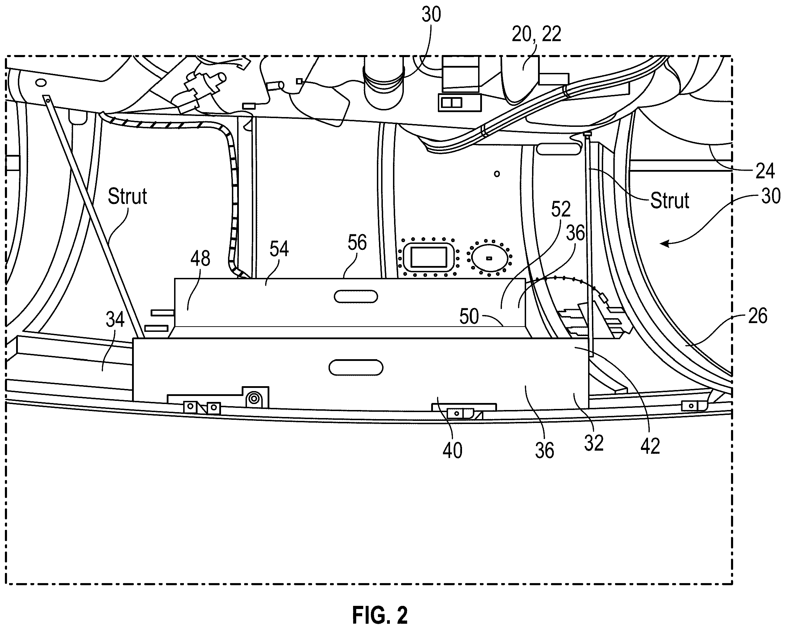

In an exemplary embodiment, the engines 20 and 22 are configured as turbine (e.g., turbofan) engines. The turbine engines operate by compressing air with inlets and compressor fans that are rotating at operating speeds, mixing fuel with the compressed air, burning the mixture in combustors, and then passing the hot, high-pressure air through turbines and nozzles to generate thrust. Each of the engines 20 and 22 includes a nacelle 24 that forms an exterior housing of the corresponding engine 20, 22. Referring also to FIG. 2, a cowl door 26 is disposed on the barrel of each of the nacelle 24 and can be moved from a closed portion 28 (shown in FIG. 1) to an open position 30 (shown in FIG. 2) to provide access to the various compartments or areas 30 inside the corresponding engine 20, 22.

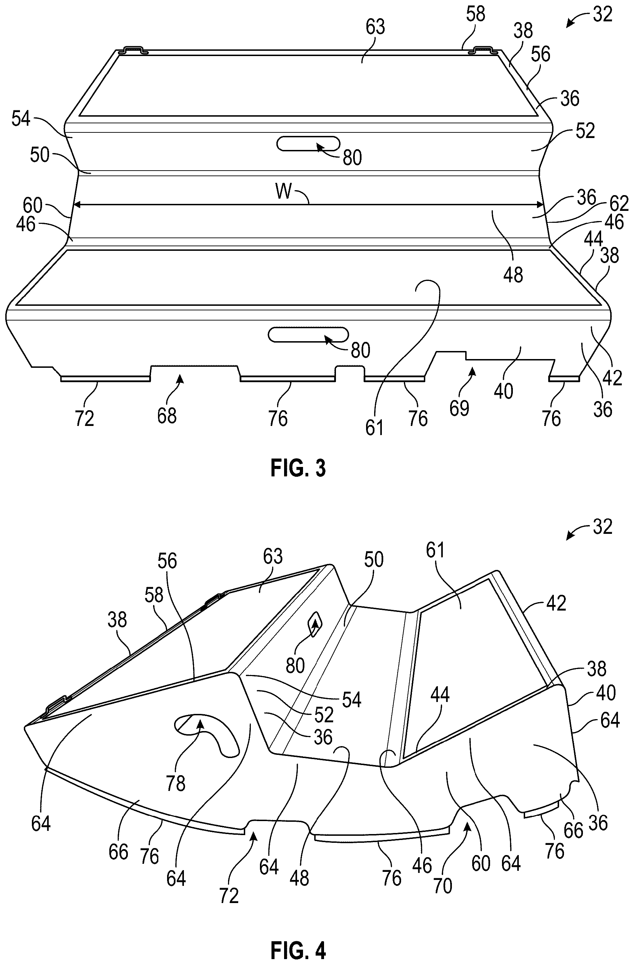

Referring to FIGS. 2-3, in an exemplary embodiment, an apparatus 32 for supporting a person adjacent to the engine 20, 22 is provided. As will be discussed in further detail below, the apparatus 32 is configured to be disposed on the inner surface 34 of the cowl door 26.

In an exemplary embodiment, the apparatus 32 includes a body 36 that is configured as a step seat 38 for supporting one or more persons. In particular and as illustrated, the body 36 includes a first riser section 40 extending generally upward to a first upper riser portion 42, a first tread section 44 extending generally horizontally from the first upper riser edge portion 42 to a first aft tread edge portion 46, a stiffener, filler section 48 extending at an incline from the first aft tread edge portion 46 to a distal stiffener, filler edge portion 50, a second riser section 52 extending generally upward from the distal stiffener, filler edge portion 50 to a second upper riser portion 54, and a second tread section 56 extending generally horizontally from the second upper riser portion 54 to a second aft tread edge portion 58. As such, when the apparatus 32 is positioned on the inner surface 34 of the cowl door 26, the surfaces of the first and second tread sections 44 and 56 are positioned substantially horizontally to provide an ergonomically friendly step seat 38 for the person(s) to stand on, sit on, lay down, or otherwise be supported for servicing the engine 20, 22. In an exemplary embodiment, the apparatus 32 includes grip tape 61 and 63 that is disposed on the surfaces of the first and second tread sections 44 and 56, respectively, to provide an anti-slip surface(s) for the person(s).

Referring to FIGS. 2-4, in an exemplary embodiment, the body 36 further includes side panels 60 and 62 that are spaced apart from each other and that are coupled to and support the lateral ends of the first riser section 40, the first tread section 44, the stiffener, filler section 48, the second riser section 52, and the second tread section 56 along a perimeter edge portion 64. Further and as illustrated, the side panels 60 and 62 each include a contoured perimeter edge portion 66 that is configured to interface with and/or otherwise match the contour of the inner surface 34 of the cowl door 26. Additionally, the first riser section 40 includes reliefs 68 and 69 (e.g., cut-out openings) and the side panels 60 and 62 include reliefs 70 and 72 (e.g., cut-out openings) along the contoured perimeter edge portions 66 to accommodate any projecting features on the inner surface 34 of the cowl door 26. As such, the apparatus 32 will securely nest against the inner surface 34 of the cowl door 26, thereby minimizing or preventing any side-to-side movement or slippage of the apparatus 32.

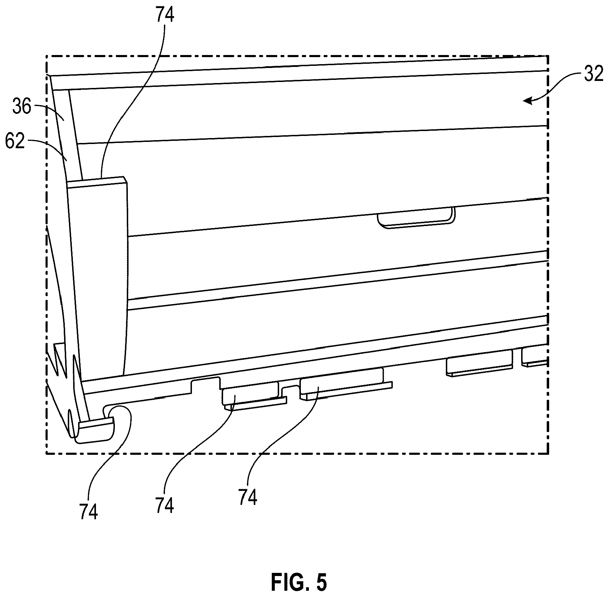

Referring also to FIG. 5, the apparatus 32 may further include inwardly extending flanges 74 (e.g., angled aluminum plates) that extend inwardly from the contoured perimeter edge portions 66 and that are shaped to interface with and/or otherwise match the contour of the inner surface 34 of the cowl door 26 to help distribute the weight of the apparatus 32 and any person(s) disposed on the apparatus 32 onto the inner surface 34 of the cowl door 26 to help minimize or prevent any damage to the cowl door 26. In an exemplary embodiment, foam pads 76 are disposed on and couple to inwardly extending flanges 74 and the contoured perimeter edge portions 66. The foam pads 76 directly interface with the inner surface 34 of the cowl door 26 to further help minimize or prevent any damage to the cowl door 26.

Referring back to FIGS. 2-4, in an exemplary embodiment, the side panels 60 and 62 and the first and second riser sections 40 and 52 include hand holes 78 and 80. The hand holes 78 and 80 allow one or more persons to ergonomically or easily grip the apparatus 32 to facilitate loading and unloading of the apparatus 32 to and from the cowl door 26.

In an exemplary embodiment, the body 36 of the apparatus 32 may be formed of or otherwise includes a rigid, structural material(s), such as, for example, an aluminum honeycomb sandwich structure material, composite material, plywood, or the like. In an exemplary embodiment, the apparatus 32 has a width (W) of from about 3 to about 6 feet, such as, for example about 3.5 to about 4.5 feet.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

The present disclosure may be further described by the following Aspects.
**Aspect 1.** An apparatus for supporting a person adjacent to an aircraft engine having a cowl door with an inner surface, the apparatus comprising:
   a body configured as a step seat for supporting the person and includes:
   a first riser section extending generally upward to a first upper riser portion;
   a first tread section extending generally horizontally from the first upper riser edge portion to a first aft tread edge portion;
   a stiffener, filler section extending at an incline from the first aft tread edge portion to a distal stiffener, filler edge portion;
   a second riser section extending generally upward from the distal stiffener, filler edge portion to a second upper riser portion; and
   a second tread section extending generally horizontally from the second upper riser portion to a second aft tread edge portion, wherein the apparatus is configured to be disposed on the inner surface of the cowl door.
**Aspect 2.** The apparatus of Aspect 1, further comprising grip tape that is disposed on the first tread section to provide an anti-slip surface on the first tread section.
**Aspect 3.** The apparatus of Aspects 1 or 2, further comprising grip tape that is disposed on the second tread section to provide an anti-slip surface on the second tread section.
**Aspect 4.** The apparatus of any one of Aspects 1-3, wherein the first riser section, the first tread section, the stiffener, filler section, the second riser section, and the second tread section have opposing lateral ends, and wherein the body further includes side panels that are spaced apart from each other and that are correspondingly coupled to and support the opposing lateral ends of the first riser section, the first tread section, the stiffener, filler section, the second riser section, and the second tread section.
**Aspect 5.** The apparatus of Aspect 4, wherein the side panels are disposed vertically and are configured to interface with the inner surface of the cowl door.
**Aspect 6**. The apparatus of Aspects 4 or 5, wherein the side panels each include a contoured perimeter edge portion, wherein the contoured perimeter edge portions are correspondingly disposed opposite the lateral ends of the first riser section, the first tread section, the stiffener, filler section, the second riser section, and the second tread section.
**Aspect 7.** The apparatus of Aspect 6, wherein the contoured perimeter edge portions are configured to substantially, matchingly interface with the inner surface of the cowl door.
**Aspect 8.** The apparatus of Aspect 7, wherein the side panels include one or more reliefs along the contoured perimeter edge portions to accommodate any projecting features on the inner surface of the cowl door.
**Aspect 9.** The apparatus of Aspect 8, wherein the first riser section includes one or more additional reliefs to accommodate any additional projecting features on the inner surface of the cowl door.
**Aspect 10.** The apparatus of any one of Aspects 7-9, further comprising one or more flanges that extend inwardly from the contoured perimeter edge portions and that are shaped to substantially, matchingly interface with the inner surface of the cowl door.
**Aspect 11.** The apparatus of Aspect 10, further comprising one or more foam pads that are correspondingly disposed on and coupled to the one or more flanges, wherein the one or more foam pads are configured to directly interface with the inner surface of the cowl door.
**Aspect 12.** The apparatus of Aspects 10 or 11, further comprising one or more additional flanges that extend inwardly from the first riser section and that are shaped to substantially, matchingly interface with the inner surface of the cowl door.
**Aspect 13.** The apparatus of Aspect 12, further comprising one or more additional foam pads that are correspondingly disposed on and coupled to the one or more additional flanges, wherein the one or more additional foam pads are configured to directly interface with the inner surface of the cowl door.
**Aspect 14.** The apparatus of any one of Aspects 4-13, wherein the side panels each have one or more holes form therethrough that are configured to allow one or more persons to extend their hands through the holes to grip the apparatus.
**Aspect 15.** The apparatus of any one of Aspects 1-14, wherein the first and second riser sections each have one or more holes form therethrough that are configured to allow one or more persons to extend their hands through the holes to grip the apparatus.
**Aspect 16.** A method for supporting a person adjacent to an aircraft engine having a cowl door with an inner surface, the method comprising the steps of:
   positioning the apparatus of any one of Aspects 1-15 on the inner surface of the cowl door to facilitate supporting the person on the apparatus adjacent to the aircraft engine.
**Aspect 17** .An apparatus for supporting a person adjacent to an aircraft engine having a cowl door with an inner surface, the apparatus comprising:
   a body configured as a step seat for supporting the person and includes:
   a first riser section extending generally upward to a first upper riser portion;
   a first tread section extending generally horizontally from the first upper riser edge portion to a first aft tread edge portion;
   a stiffener, filler section extending at an incline from the first aft tread edge portion to a distal stiffener, filler edge portion;
   a second riser section extending generally upward from the distal stiffener, filler edge portion to a second upper riser portion;
   a second tread section extending generally horizontally from the second upper riser portion to a second aft tread edge portion, and
   side panels that are spaced apart from each other and that are correspondingly coupled to and support the first riser section, the first tread section, the stiffener, filler section, the second riser section, and the second tread section, wherein the side panels are disposed vertically and each side panel includes a contoured perimeter edge portion, wherein the contoured perimeter edge portions are configured to substantially, matchingly interface with the inner surface of the cowl door.
**Aspect 18.** The apparatus of Aspect 17, further comprising one or more flanges that extend inwardly from the contoured perimeter edge portions and that are shaped to substantially, matchingly interface with the inner surface of the cowl door.
**Aspect 19.** The apparatus of Aspect 18, further comprising one or more additional flanges that extend inwardly from the first riser section and that are shaped to substantially, matchingly interface with the inner surface of the cowl door.
**Aspect 20.** The apparatus of Aspect 19, further comprising foam pads that are correspondingly disposed on and coupled to the one or more flanges and the one or more additional flanges, wherein the foam pads directly interface with the inner surface of the cowl door.

## Claims

1. An apparatus for supporting a person adjacent to an aircraft engine having a cowl door with an inner surface, the apparatus comprising:
a body configured as a step seat for supporting the person and includes:
a first riser section extending generally upward to a first upper riser portion;
a first tread section extending generally horizontally from the first upper riser edge portion to a first aft tread edge portion;
a stiffener, filler section extending at an incline from the first aft tread edge portion to a distal stiffener, filler edge portion;
a second riser section extending generally upward from the distal stiffener, filler edge portion to a second upper riser portion; and
a second tread section extending generally horizontally from the second upper riser portion to a second aft tread edge portion, wherein the apparatus is configured to be disposed on the inner surface of the cowl door.

2. The apparatus of claim 1, further comprising grip tape that is disposed on the first tread section to provide an anti-slip surface on the first tread section.

3. The apparatus of claims 1 or 2, further comprising grip tape that is disposed on the second tread section to provide an anti-slip surface on the second tread section.

4. The apparatus of any one of claims 1-3, wherein the first riser section, the first tread section, the stiffener, filler section, the second riser section, and the second tread section have opposing lateral ends, and wherein the body further includes side panels that are spaced apart from each other and that are correspondingly coupled to and support the opposing lateral ends of the first riser section, the first tread section, the stiffener, filler section, the second riser section, and the second tread section.

5. The apparatus of claim 4, wherein the side panels are disposed vertically and are configured to interface with the inner surface of the cowl door.

6. The apparatus of claims 4 or 5, wherein the side panels each include a contoured perimeter edge portion, wherein the contoured perimeter edge portions are correspondingly disposed opposite the lateral ends of the first riser section, the first tread section, the stiffener, filler section, the second riser section, and the second tread section.

7. The apparatus of claim 6, wherein the contoured perimeter edge portions are configured to substantially, matchingly interface with the inner surface of the cowl door.

8. The apparatus of claim 7, wherein the side panels include one or more reliefs along the contoured perimeter edge portions to accommodate any projecting features on the inner surface of the cowl door.

9. The apparatus of claim 8, wherein the first riser section includes one or more additional reliefs to accommodate any additional projecting features on the inner surface of the cowl door.

10. The apparatus of any one of claims 7-9, further comprising one or more flanges that extend inwardly from the contoured perimeter edge portions and that are shaped to substantially, matchingly interface with the inner surface of the cowl door.

11. The apparatus of claim 10, further comprising one or more foam pads that are correspondingly disposed on and coupled to the one or more flanges, wherein the one or more foam pads are configured to directly interface with the inner surface of the cowl door.

12. The apparatus of claims 10 or 11, further comprising one or more additional flanges that extend inwardly from the first riser section and that are shaped to substantially, matchingly interface with the inner surface of the cowl door,
and optionally further comprising one or more additional foam pads that are correspondingly disposed on and coupled to the one or more additional flanges, wherein the one or more additional foam pads are configured to directly interface with the inner surface of the cowl door.

13. The apparatus of any one of claims 4-12, wherein the side panels each have one or more holes form therethrough that are configured to allow one or more persons to extend their hands through the holes to grip the apparatus.

14. The apparatus of any one of claims 1-13, wherein the first and second riser sections each have one or more holes form therethrough that are configured to allow one or more persons to extend their hands through the holes to grip the apparatus.

15. A method for supporting a person adjacent to an aircraft engine having a cowl door with an inner surface, the method comprising the steps of:
positioning the apparatus of any one of claims 1-14 on the inner surface of the cowl door to facilitate supporting the person on the apparatus adjacent to the aircraft engine.
